Europäisches Patentamt

European Patent Office

Office européen des brevets

(19)

(11) Publication number:

**0 046 568**

**B1**

(12) **EUROPEAN PATENT SPECIFICATION**

(45) Date of publication of patent specification: **16.01.85**

(51) Int. Cl.⁴: **A 01 B 33/10**

(21) Application number: **81106420.3**

(22) Date of filing: **19.08.81**

(54) A rotary cultivator hoeing tool fitted with one or more non-compaction teeth.

(30) Priority: **26.08.80 IT 4006480**
**23.07.81 IT 4007981**

(43) Date of publication of application:
**03.03.82 Bulletin 82/09**

(45) Publication of the grant of the patent:
**16.01.85 Bulletin 85/03**

(84) Designated Contracting States:
**AT BE CH DE FR GB IT LI NL SE**

(56) References cited:
**GB-A- 214 326**
**GB-A- 668 156**
**US-A-1 594 789**
**US-A-1 676 646**
**US-A-1 690 866**
**US-A-2 083 662**
**US-A-2 636 291**
**US-A-4 043 399**

(73) Proprietor: **SOCIETA' DI FATTO ASCO di**
**VANDELLI DINO & C.**
**376, Via Martiri Artioli**
**I-41018 San Cesario sul Panaro (IT)**

(72) Inventor: **Vandelli, Dino**
**1, Via Amendola**
**I-41057 Spilamberto Modena (IT)**
Inventor: **Fabriani, Ugo**
**376, Via Martiri Artioli**
**I-41018 San Cesario Sul Panaro Modena (IT)**
Inventor: **Vandelli, Ambrogino**
**4B, Via Mario Pellegrini**
**I-41058 Vignola Modena (IT)**

(74) Representative: **Gardi, Giuliano**
**Gardipatent Palazzo Prora 605, Via Giardini**
**I-41100 Modena (IT)**

Courier Press, Leamington Spa, England.

EP 0 046 568 B1

## Description

The invention relates to a rotary cultivator hoeing tool fitted with one or more non compaction teeth, that is a tool designed for application to the flange of a cultivator's rotating shaft and furnished with one or more teeth serving to displace earth in order to prevent its becoming compact.

It is already known from US—A—1680866 a ground working implement comprising a central member adapted to be rotated, a plurality of radial and circumferentially spaced arms mounted on said member, and transverse ground engaging blades mounted at the outer ends of the arms and disposed substantially at right angles to the radial lines of the arms.

An additional longitudinal cutting element is mounted in connection with each blade and is arranged to engage and cut the ground subsequent to the engagement of said blade.

Said additional longitudinal cutting element is a cutting tooth projecting rearwardly and outwardly from each blade, the outer edge of the tooth being sharpened and being disposed at an obtuse angle to the outer face of the blade. The prior art thus outlined stands in need of further improvement with regard to the possibility of hoeing being made more suitable to ends required and more profitable, and with regard to improving the hoeing tool strength and its ability to withstand greater degrees of stress engendered by displacing earth to far greater depths with those obtainable with the tool referred to in US—A—1680866; further, with regard to the option of utilizing a single cultivator rotor to carry different shapes of blade and different kinds of teeth according to the type of ground and nature of the crop being farmed and — where opportune — to the option of utilizing blades with independent rear teeth which can be changed singly in case of breakage or of relatively advanced state of wear.

From the outline foregoing one may discern the need for a solution to the technical problem posed in seeking to invest the hoe-blade with new kinds of shape causing it to reach further forward in the direction of actual penetration into the ground, thus giving greater hoeing depth and at the same time achieving a more satisfactory ploughing-in of green manure — not hitherto obtained with the traditional hoe-blade; further, the composite hoe-tool envisaged will comprise a blade embodied independently of the rear tools or elements incorporated thereinto.

The invention solves the above technical problem by adopting a blade whose surface is markedly extended along the line of penetration into the ground, whilst to the rear of the blade body and approximately at right-angles to that same part exhibiting the cutting edge, one has at least one radially-set tool, or tooth, working through a greater radius than that described by the single blade, and forming the composite hoeing tool therewith; the hoe-blade may be furnished uppermost with rearwardly-inclined flaps; the tool is fitted to an L-shaped mounting extending side-on from a given rotor-flange, and is made up through single elements thereof being furnished with a shank slipped onto the transverse end-portion of said L-mounting and locked thus. Advantages offered by the invention herein are: greatly-enlarged effective hoe-blade ploughing-surface area, with better and sweeter penetration into the earth; possibility of achieving an effect similar to that produced by a spade; greater resistance to stress on the part both of blade and of rear teeth; greater hoeing-depth; greater hoeing coverage; option of utilizing a lesser number of tools per flange and a lesser number of flanges per single rotor — thus simplifying the actual rotor; reduced power-requirement and therefore reduced stress on all machine parts, im comparison to a like effort produced by cultivators fitted with traditional tools; finer break-up of soil; greater working speed; better seed-bed preparation; finally, interchangeable single parts in the event of these being embodied separately.

Certain ways of carrying the invention into effect are illustrated, strictly by way of example, in the five sheets of accompanying drawings, in which a tool is demonstrated of the type capable of being dismantled, and wherein

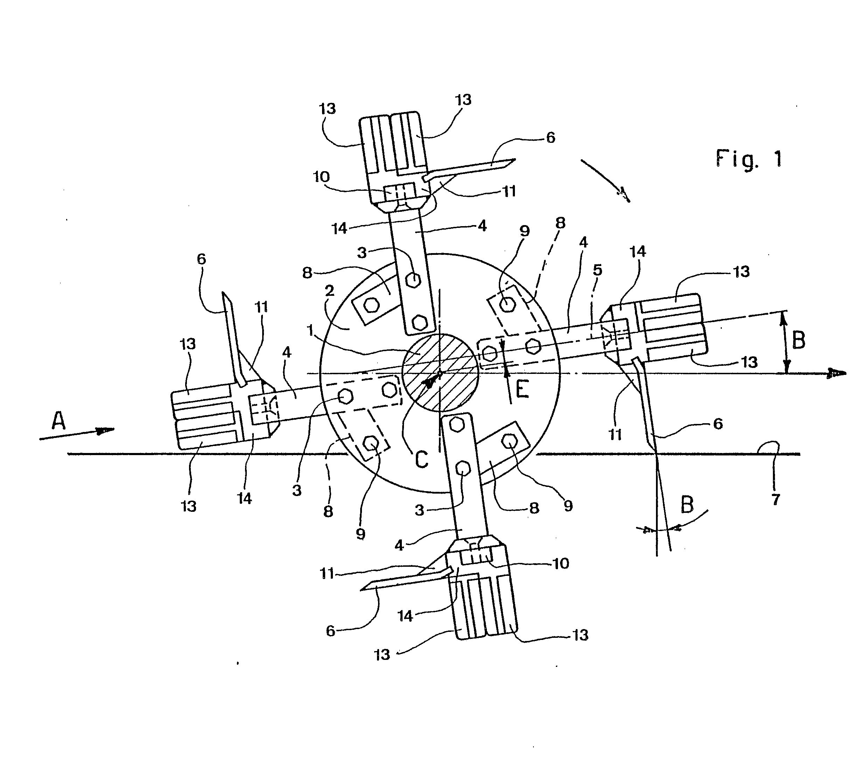

Figure 1 is a partially cut-away lateral view of a group of four tools of the kind to which the invention relates, comprising a left-hand pair and a right-hand pair, attached to one of the flanges on the cultivator shaft;

Figure 2 is a view of Figure 1 according to letter A, partly cut-away and on larger scale;

Figure 3 is a partly cut-away frontal view of a trapezoidal hoe-blade of the kind to which the invention relates, showing flaps located at the greater base thereof designed to assist turning over of the earth;

Figure 4 is a view from the left of the blade in Figure 3;

Figure 5 is a frontal view as per Figure 3 of a trapezoidal how-blade, this upturned with respect to that in Figure 3, hence without flaps, and suited to looser earth;

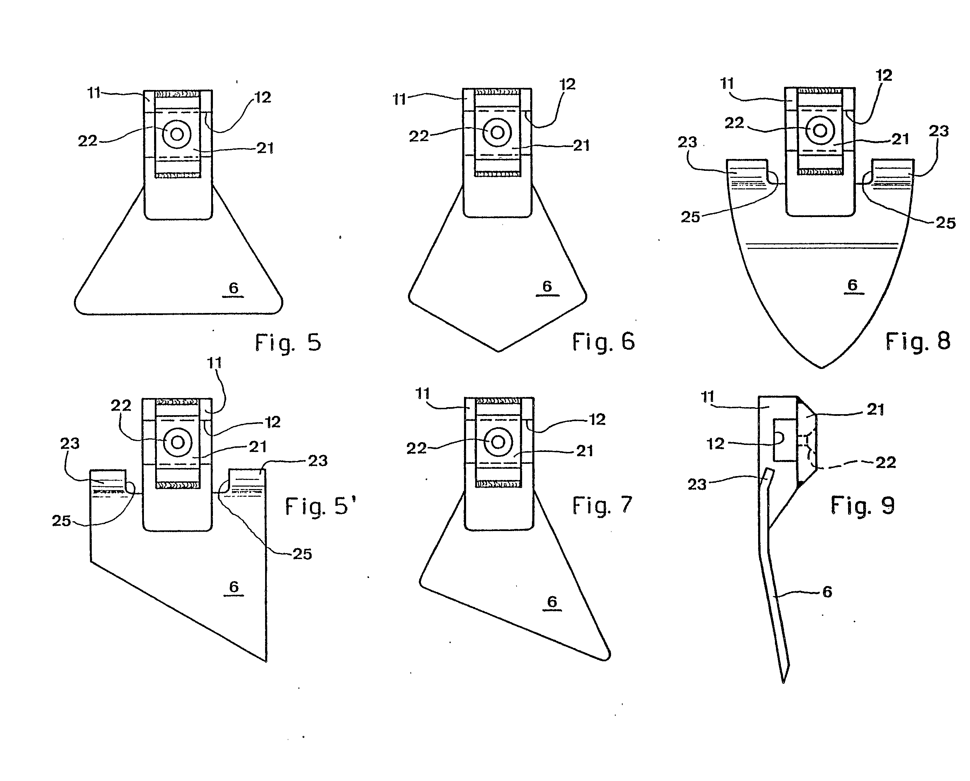

Figure 5' is a frontal view of a guillotine-type blade provided with upper flaps, particularly suited to gradual penetration of the earth and turning over of the same;

Figure 6 is the frontal view of a blade deriving from that in Figure 5, there being an additional lower triangular portion giving deeper penetration into soil;

Figure 7 is a variant of Figure 6, designed for more gradual penetration into the soil;

Figure 8 is the frontal view of a shield-shaped blade for penetrating compacted earth, the blade-body inclined inwards in the event that angle B between ground and implements should be of an elevation too great to allow optimum penetration into the earth;

Figure 9 is the view from the left of Figure 8;

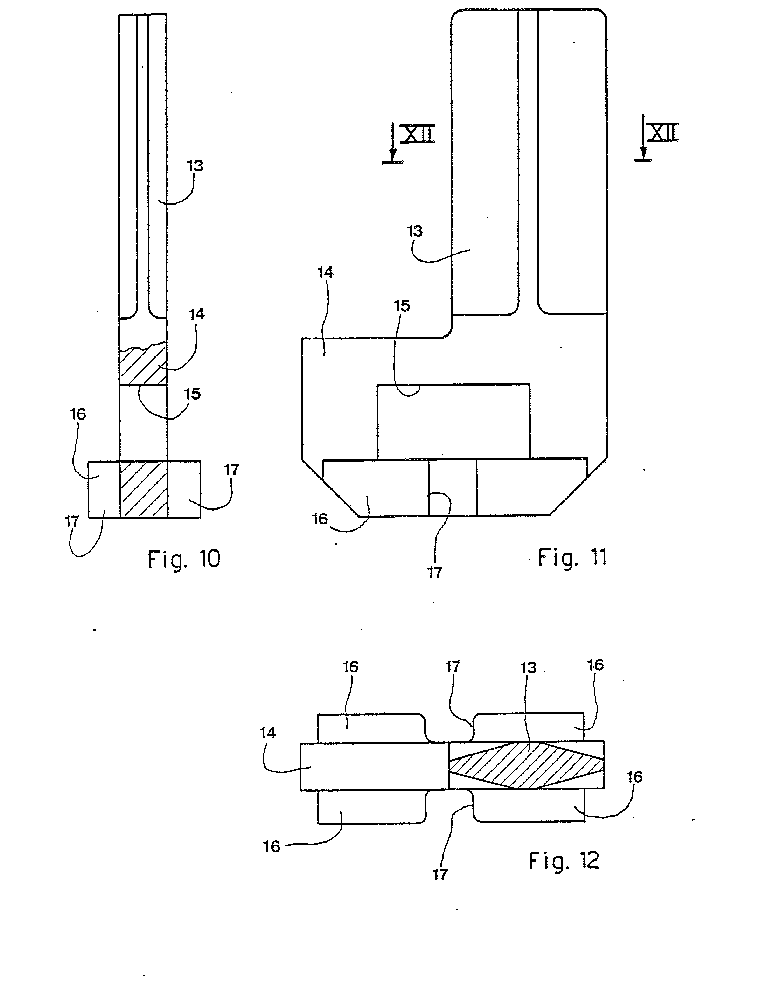

Figure 10 is a front view from the work side, partly cut-away of the working surface of one of the entrenching tools or teeth attached to the rear of the hoe-blade and forming a 90° angle therewith;

Figure 11 is the view from the left of the tool in Figure 10;

Figure 12 is the cross section through XII—XII in Figure 11 placing in evidence that part of the tool designed to penetrate in either direction.

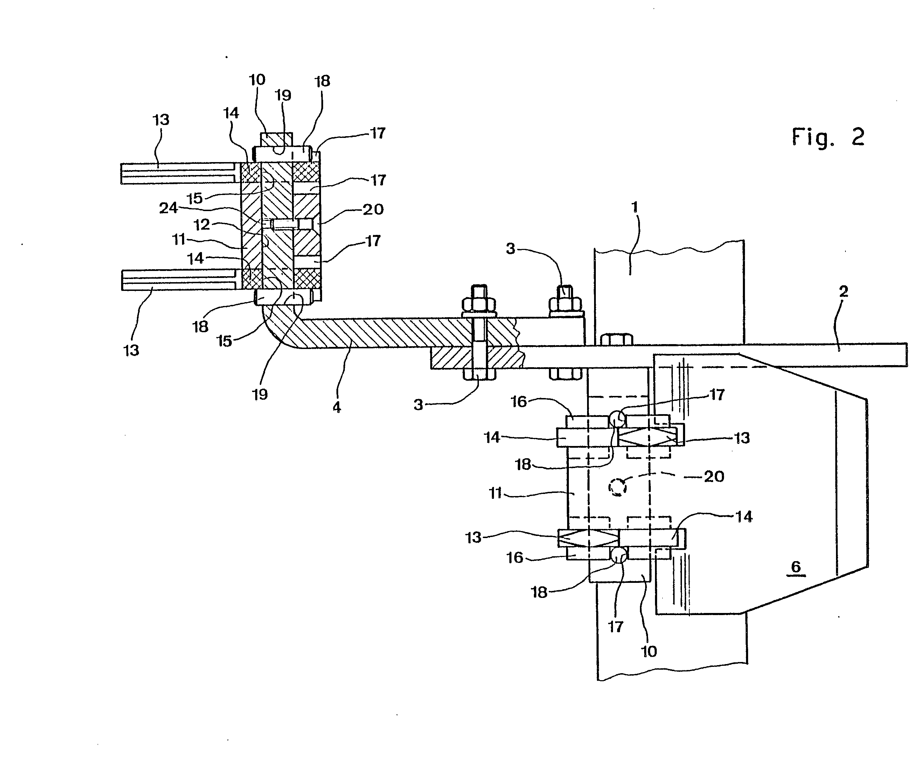

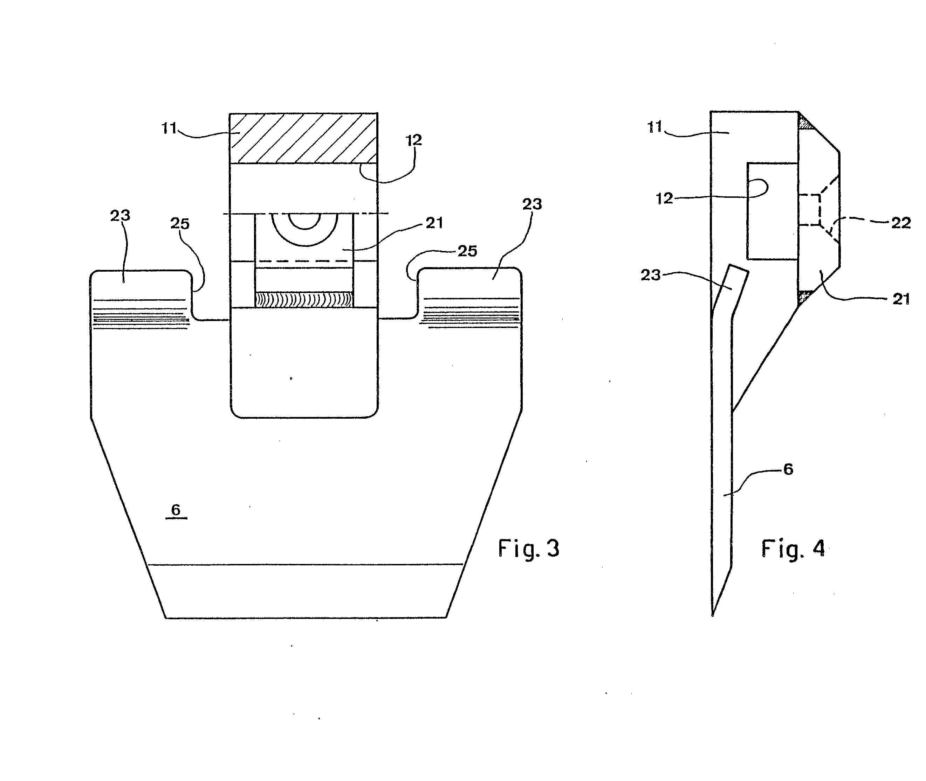

With reference to the drawings: 1 denotes the cultivator's horizontal shaft or rotor, carrying one or more flanges 2 to whose faces two or more L-shaped mountings are fixed by means of bolts 3 and exhibit a straight-arm 4 whose axis 5 lies out of radial alignment with respect to axis C to a degree E determining the contact angle B between blade 6 and ground 7; values E and B depend upon the hoe-blade length, upon characteristics of the ground, and upon the height of shaft 1 with respect thereto; 8 denotes possible strips fixed by bolting through 9 to flange 2 and mating with the back faces of straight-arms 4 thus providing a reinforcing strut; 10 denotes the transverse end-portion of each said (L-shaped) mounting, bent through square with respect to straight-arm 4 thereof such as to provide the support proper for shank 11 of the hoe-blade 6, this being provided with a slot 12 (Figure 2) enabling its slipping transversely onto the said end-portion 10; 13 denotes the working part of the rear tools or teeth, each of which exhibits a fixing shank 14 provided with a slot 15 enabling sliding thereof onto the end-portion 10 of each arm 4; the working part of each tooth — rhomboid in section — is displaced longitudinally with respect to said fixing shank and said slot thus allowing for transverse offset of the working parts of each pair of said rear teeth in order to forestall entanglement; 16 denotes upper lateral support protrusions from fixing-shank 14, broken by notches 17 serving to protect the extremity of each pin 18 inserted in the pair of holes 19 exhibited by the end-portion 10 of each arm 4 for the purpose of locking together the assembly comprising two shanks 14 sandwiching the shank 11 of hoe-blade 6 — this attached to end-portion 10 by bolt 20 — said assembly retained between and by a pair of such pins 18; 21 (Figure 3) denotes an upper cap enclosing slot 12, furnished with an aperture 22 for passage of bolt 20; 23 denotes a pair of upper flaps located on hoe-blade 6 and angled to the rear so as to assist ploughing under; 24 (Figure 2) represents a central threaded seat in end arm portion 10 into which bolt 20 is screwed; 25 denotes a pair of recesses located uppermost in blade 6 between the shank 11 and flaps 23 thereof.

Attachment of the composite tool to arm 4/10 — in the case of those embodiments described in Figures 5, 6 and 7 (see Figure 2) — comes about as follows: slot 15 of the fixing-shank 14 of a first rear tooth 13 is slid over the end of end-portion 10 bent square away from the straight-arm 4 of the L-shaped mounting, and slipped forward thus until notch 17 engages side-on with that resilient pin 18 located in hole 19 nearest straight-arm 4; slot 12 of the hoe-blade 6 shank 11 is then slid over the same end-portion 10 and fixed by locating bolt 20; slot 15 of the fixing-shank 14 of a second rear tooth 13 — offset from the first — is then added similarly; lastly, the remaining resilient pin 18 is introduced into relative hole 19 and the protective notch 17 offered by shank 14.

In the case of embodiments illustrated in Figures 3, 5' and 8, attachment is brought about following prior insertion of the shanks 14 of the two rear teeth 13 into recesses 25 at the upper region of hoe-blade 6, all slots thereof subsequently slid (en bloc) over the end of the end-portion 10 of arm 4. Shaft 1 of the cultivator being caused to turn, the rotary hoe is lowered into the soil and the tractor moved forward: hoe-blade 6 penetrates into the earth followed on by the pair of tools or teeth 13 which cut into the ground thus breaking up the smooth surface thereof left by passage of the blade, and preparing an already broken-up soil through which the blade following may pass encountering considerably less resistance; more especially, the blade itself 6 — where provided with flaps 23 — produced a marked 'plough-under' effect. It is envisaged that the arms 4 of one or more L-shaped mountings may be fixed to the flange 2 by interposing a packing-piece thus offsetting one pair of teeth 13 from that on the hoe-tool following behind; — for instance, if teeth of the first pair are set apart 8 cm transversely, one is able to produce a longitudinal cut every 4 cm, with optimum break-up of soil.

When carrying the invention into effect, materials, dimensions, constructive details, the angle of attack of blade 6, its shape, width, and length (even up to 18 cm and more) and the length of the rear teeth 13 (up to 20 cm or more) may all differ from that described whilst remaining technically equivalent and by no means straying from within the framework of protection afforded to the invention claimed herein.

It will be observed that the rear tooth 13 fixing shank is set square and that, in the case of two such teeth being employed, the shank of one faces forward whilst the shank of the other faces to the rear, thus providing the offset necessary to avoid entanglement: the tooth 13 is therefore given a double cutting edge.

It will be noted that the hoe-tool 6 to which the invention relates embodies a completely different length to width ratio (i.e. longitudinal to transverse) than that of traditional hoe tools attached to the rotor of a cultivator; in fact, traditional tools have always been noticeably more wide than long (e.g. 16 cm as against a maximum 12 cm) which means that in order to obtain a given minimum hourly production one needs to fit more than four tools to each single flange and bunch the flange closer together on the same rotor. It will also be noted that rear teeth 13 to which the invention relates reach to far greater depths than permitted by teeth fixed to the transverse stretch of a traditional hoe tool.

**Claims**

1. A rotary cultivator hoeing tool affixed to a flange (2) of a cultivator shaft (1), including a hoe-blade (6) followed by at least one tooth (13) directed to the rear of the cutting edge of said hoe-blade, characterized by the fact that the tool comprises: an L-shaped mounting member having an arm (4), part of the L, affixed to the cultivator shaft flange (2) to extend in a generally radial direction of the flange and a transverse end portion (10), constituting the other arm of the L, attached to said arm (4) to extend transversely therefrom; said hoe-blade (6) having at an upper central section thereof a shank (11) attachable to said transverse end portion (10); said tooth (13) being attached to said transverse end portion (10) and aligned with said arm (4) at right-angle to said hoe-blade (6).

2. Hoeing tool according to claim 1, characterized by the fact that said hoe-blade (6) is dimensioned to have a length approximately equal or greater than its own width, said length being longitudinally measured from its connecting axis with said transverse end portion (10).

3. Hoeing tool according to claim 1 and 2 characterized by the fact that said hoe-blade (6) includes a pair of rearwardly inclined upper flaps (23).

4. Hoeing tool according to claim 1, characterized by the fact that said shank (11) includes a transverse slot (12) engageable with said transverse end portion (10); said slot (12) being provided with a frontal cap (21) incorporating a longitudinal aperture (22) through which a bolt (20) passes to threadedly engage a central threaded set (24) formed in the transverse end portion (10) to thereby connect said shank (11) to said transverse end portion (10).

5. Hoeing tool according to claim 1 characterized by the fact that each of said teeth (13) has an upper fixing shank (14) extending substantially perpendicular to the tooth; said upper shank having a transverse slot (15) for receiving said transverse end portion (10); an upper part of said fixing shank (14) including two pairs of lateral support protrusions (16) located on opposite sides of the fixing shank (14), respectively each pair of support protrusions (16) being on each side of the shank (14) being separated by a notch (17); one of said notches (17) being designed to accommodate a resilient pin (18).

6. Hoeing tool according to claims 3, 4 and 5 characterized by the fact that said hoe-blade (6) includes a pair of recesses (25) located respectively between the shank (11) of the blade (6) and said rearwardly inclined flaps (23); each recess receiving the fixing shank (14) of one of said teeth (13), enabling the blade shank (11) and the fixing shank (14) to be coupled together on the transverse end portion (10) and retained transversely thereon by means of said resilient pin (18), said pin being inserted with a corresponding hole (19) formed in said transverse end portion (10).

**Revendications**

1. Outil de sarclage d'un cultivateur rotatif fixé au collet (2) d'un arbre du cultivateur (1), comprenant une lame de houe (6) et au moins une dent (13) dirigée vers l'arrière du fil de cette lame de houe, caractérisé par le fait que l'outil comporte un élément de montage en L ayant un bras (4) formant une partie du L, fixé au collet de l'arbre du cultivateur (2), qui prolonge dans une direction généralement radiale le collet, et l'extrémité de la partie transversale (10) constituant l'autre bras de ce L, fixée à ce bras (4), qui se prolonge transversalement à partir de là; la lame de la houe (6) ayant en sa partie centrale supérieure un porte-lame (11) qui peut être relié à cette extrémité de la partie transversale (10); la dent (13) est fixée à l'extrémité de la partie transversale (10) et alignée avec le bras (4) en formant un angle droit avec la lame de la houe (6).

2. Outil de sarclage selon la revendication 1, caractérisé par le fait qu l'on donne à la lame de la houe (6) des dimensions telles que sa longueur étant mesurée de façon longitudinale à partie de son axe de raccordement avec l'extrémité de la partie transversale (10).

3. Outil de sarclage selon les revendications 1 et 2, caractérisé par le fait que la lame de la houe (6) comprend une paire de volets supérieurs inclinés vers l'arrière (23).

4. Outil de sarclage selon la revendication 1, caractérisé par le fait que le porte-lame (11) comporte une encoche transversale (12) dans laquelle peut venir s'engager l'extrémité de la partie transversale (10); cette encoche (12) est munie d'un chapeau frontal (21) qui comporte un orifice longitudinal (22) à transvers lequel passe un boulon fileté (20) qui se fixe dans une cavité centrale filetée (24) ménagée dans l'extrémité de la partie transversale (10), reliant ainsi le porte-lame (11) à l'extrémité de la partie transversale (10).

5. Outil de sarclage selon la revendication 1, caractérisé par le fait que chacune des dents (13) comporte, en amont, un fixe-dent (14) qui a un prolongement important perpendiculairement à la dent; ce fixe-dent situé en amont de la dent comporte un encoche transversale (15) destinée à recevoir l'extrémité de la partie transversale (10); la partie amont du fixe-dent (14) comprenant deux paires d'avancées latérales d'appui (16) se trouvant respectivement de chaque côté du fixe-dent (14), séparées par une encoche (17); l'une de ces encoches étant conçue pour recevoir un clavette élastique (18).

6. Outil de sarclage selon les revendications 3, 4 et 5, caractérisé par le fait que la lame de la houe (6) comprend une paire d'évidements (25) situés respectivement entre le porte-lame (11) de la lame (6) et les volets inclinés vers l'arrière (23); chaque évidement recevant le fixe-dent (14) de l'une des dents (13), permettant au fixe-lame (11) et au fixe-dent (14) d'être couplés sur l'extrémité de la partie transversale (10) et d'y être retenus transversalement par la clavette elastique (18), celle-ci étant insérée dans une cavité correspondante (19) ménagée à l'intérieur de l'extrémité de la partie transversale (10).

## Patentansprüche

1. Arbeitsgerät eines Rotorkrümlers, das an einen Flansch (2) der Fräswelle (2) befestigt ist, bestehend aus einem Spatenmesser (6) und daran angeschlossen mindestens einem zur Rückseite der Schnittkante genannten Spatenmessers gerichteten Zahns (13), dadurch gekennzeichnet, dass das Arbeitsgerät folgendes aufweist: ein L-förmiges Bauelement mit einem Arm (4), wobei ein Teil der L-Form an den Fräswellenflansch befestigt ist und von dort radial in Flanschrichtung weiterläuft, das querliegende Endstück (10) dagegen den anderen Arm der L-Form bildet und von genanntem Arm (4) quer vorstrebt; das genannte Spatenmesser (6) weist auf seiner oberen Zentralpartie einen an das genannte querliegenden Endstück (10) anbringbaren Schaft (11) auf; der genannte Zahn (13) ist mit dem querliegenden Endstück (10) verbunden und bildet mit dem Arm (4) einen rechten Winkel zum Spatenmesser (6).

2. Arbeitsgerät nach Patentansprüch 1, dadurch gekennzeichnet, dass die Längenausbildung des genannten Spatenmessers (6) circa gleich oder grösser als die Messerbreite ist, wobei dieser Längenwert in Längsrichtung von der Verbindungsachse mit dem querliegenden Endstück (10) gemessen wird.

3. Arbeitsgerät nach einem der Patentanspruch 1 oder 2, dadurch gekennzeichnet, dass das genannte Spatenmesser (6) eine Paar rückwärts geneigte, obenliegende Klappen aufweist (23).

4. Arbeitsgerät nach Patentansprüch 1, dadurch gekennzeichnet, dass der genannte Schaft (11) eine mit dem querliegenden Endstück (10) verbindbare Quernut (12) aufweist; diese Nut (12) ist mit einem eine Längsöffnung (22) aufweisenden Frontalaufsatz (21) versehen, wodurch ein Bolzen (20) in eine zentrale Gewindebohrung (24) des querliegenden Endstücks (10) zur Verbindung von Schaft (11) und querliegendem Endstück (10) verschraubt ist.

5. Arbeitsgerät nach Patentanspruch 1, dadurch gekennzeichnet, dass sämtliche Zähne (13) jeweils eine obenliegenden Halterung (14) aufweisen, die im wesentlichen rechtwenklig zu den einzelnen Zähnen verläuft; diese obenliegende Halterung weist eine Quernut (15) auf, in die das querliegende Endstück (10) eingreift; die Oberseite dieser Halterung (14) weist zwei Paar seitlicher Vorstehelemente (16) auf den entgegengesetzten Seiten der Halterung (14) auf, wobei jeweils ein Paar dieser Vorstehelemente (16) auf beiden Seiten der Halterung (14) durch eine Nute (17) getrennt ist; eine dieser Nuten (17) dient zur Aufnahme eines Sprengstiftes (18).

6. Arbeitsgerät nach den Patentansprüchen 3, 4 und 5, dadurch gekennzeichnet, dass das genannte Spatenmesser (6) ein Paar Vertiefungen (25) jeweils zwischen dem Schaft (11) des Messers (6) und den rückwärts geneigten Klappen (23) aufweist; jede Vertiefung ist zu Aufnahme der Halterung (14) einer der genannten Zähne (13) ausgelegt und ermöglicht somit das Kuppeln von Messerschaft (11) und Halterung (14) auf dem querliegenden Endstück (10) sowie ihren Halt in Querrichtung durch den genannten Sprengstift (18); dieser Sprengstift (18) ist in eine im querliegenden Endstück (10) ausgebildetes Loch (19) eingesteckt.

Fig. 1

Fig. 2

Fig. 3

Fig. 4

Fig. 5

Fig. 6

Fig. 8

Fig. 5'

Fig. 7

Fig. 9

0 046 568

Fig. 10

Fig. 11

Fig. 12